# EUROPEAN PATENT SPECIFICATION

(11) **EP 0 501 030 B1**
(45) Date of publication and mention of the grant of the patent: **05.03.1997**
(21) Application number: 91121381.7
(22) Date of filing: 12.12.1991
(51) Int. Cl.: B29D 30/30

(54) **Material winding method and apparatus of tire molding machine**
Verfahren und Wickelvorrichtung für eine Reifenaufbaumaschine
Procédé et dispositif d'enroulement d'un matériau pour une machine de fabrication de pneus

(30) Priority: 01.03.1991 JP 35994/91
(43) Date of publication of application: 02.09.1992
(73) Proprietor: MITSUBISHI JUKOGYO KABUSHIKI KAISHA, Tokyo 100 (JP)
(72) Inventor: Hidemasa, Sato, c/o Nagasaki Shipyard & Eng., Nagasaki-shi, Nagasaki-ken (JP); Yoshinori, Miyamoto, c/o Nagasaki Shipyard & Eng., Nagasaki-shi, Nagasaki-ken (JP); Jiro, Agawa, c/o Nagasaki Shipyard & Eng., Nagasaki-shi, Nagasaki-ken (JP)
(74) Representative: Henkel, Feiler, Hänzel & Partner

(56) References cited:
- EP-A- 0 273 847
- US-A- 3 170 829
- US-A- 3 989 565
- US-A- 4 457 802
- US-A- 4 792 372
- US-A- 4 975 134
- US-A- 4 976 807

## Description

### BACKGROUND OF THE INVENTION:

### Field of the Invention:

This invention relates to a material winding method and to an apparatus as defined in the preamble of claim 2 for use in a tire molding machine.

### Description of the Prior Art:

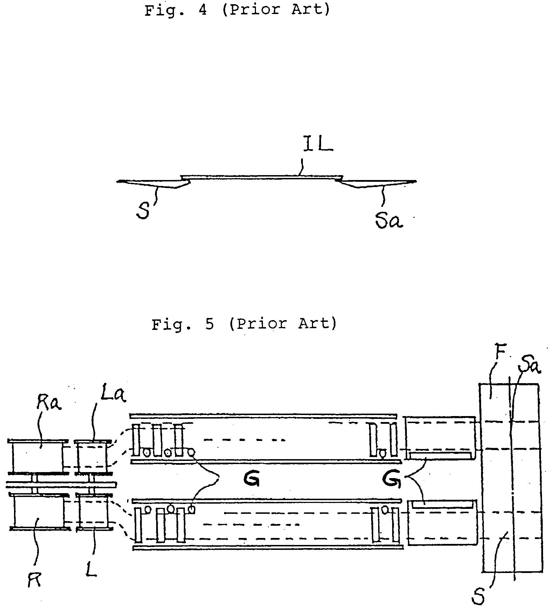

In the field of tire molding, generally, a pair of sheets of material S and Sa (such as tire side wall material) as shown in Fig. 4 is wound around a molding drum. If these sheets of material S and Sa are wound around the molding drum with no change in condition, the winding position of each sheet of material becomes incompatible with the size of a tire. However, since the preceding stage of supplying the material to a tire molding machine is used in common, the sheets of material should be wound around the molding drum under predetermined conditions.

Conventionally, as shown in Fig. 5, a pair of rolls R and Ra of tire material is unrolled, a pair of sheets of material S and Sa (such as tire side wall material) is delivered, and liners (interposed for the purpose of preventing adhesion of the sheets) are wound in the form of liner rolls L and La. The sheets of material S and Sa are conveyed by guide roller conveyors A and Aa and wound around a molding drum F. Each conveyor A, Aa is provided with a guide G whose position in the widthwise direction of the conveyor is adjustable so that the widthwise position of each sheet of material S, Sa can be adjusted. The position of each guide G is adjusted each time the tire size is changed. In Fig. 4, IL designates a sheet of tire base material.

In the foregoing conventional system, to cope with when the tire size is changed, the tire molding machine includes a complicated guide mechanism for adjusting the spacing between the sheets of material to be wound; thus, a long time is needed in spacing adjustment.

A prior art automatic side wall servicer disclosing the features of the preamble of claim 2 is described in US-A-4,792,372. This known device comprises an initial aligning device and a final aligning device. Therebetween the sheets of material are supplied and cut by appropriate devices. The initial aligning device consists of two pairs of conical rollers which are adjustable with respect to a molding position in the width of the sheet material. The final aligning device consists of a pair of carriages which consists of three guide plates arranged parallel to each other while two of them being laterally shiftable with respect to a fixed inner guide plate. The spacing between the outer and the intermediate guide plates is adjusted to accommodate sheets of different widths and the distance of the outer guide plate from the center line is adjustable to change a moulding position. In case of a tire size change, i.e. in case of a change of the molding position, in the prior art device lateral shifting not only of the final aligning device but also of the initial aligning device which is to be aligned with the final aligning device is required. In addition to the lateral shifting also the spacings of the initial and the final aligning devices have to be adjusted in order to fit the width of the material for a different tire size.

### Summary of the invention

It is the object of the present invention to provide a material winding method and apparatus for use in a tire molding machine, by which a pair of sheets of material can be accurately wound onto a molding drum regardless of a change of size of a tire to be molded.

According to the invention there is provided a material winding method as recited in claim 1 and a material winding apparatus as defined in claim 2.

According to the present invention, to wind a pair of sheets of material of given length, such as tire side wall material, around a molding drum, a pair of sheets of material unrolled from rolls which forms part of each tire is delivered onto a first pair of conveyors, the pair of sheets of material is cut to a length corresponding to the circumference of each tire, a second pair of conveyors is shifted in the widthwise direction thereof such that the spacing between them becomes compatible with the width of the tire, the cut pair of sheets of material is conveyed by the second pair of conveyors, and then, the cut pair of sheets of material is wound around the molding drum. Therefore, the cut sheets of material can be wound around the molding drum at predetermined widthwise positions.

### BRIEF DESCRIPTION OF THE DRAWINGS:

Fig. 1 is a general schematic diagram showing an embodiment of the present invention;
Fig. 2 is a plan view showing an important portion of Fig. 1;
Fig. 3 is a side view corresponding to Fig. 2;
Fig. 4 is a sectional view showing sheets of tire material being adhered; and
Fig. 5 is a plan view showing a conventional system.

### DESCRIPTION OF THE PREFERRED EMBODIMENT:

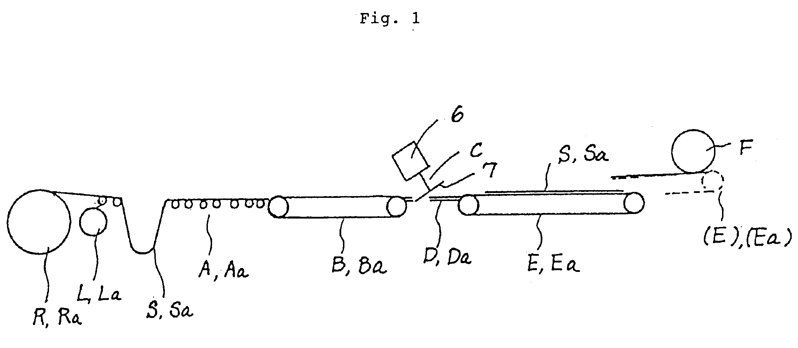

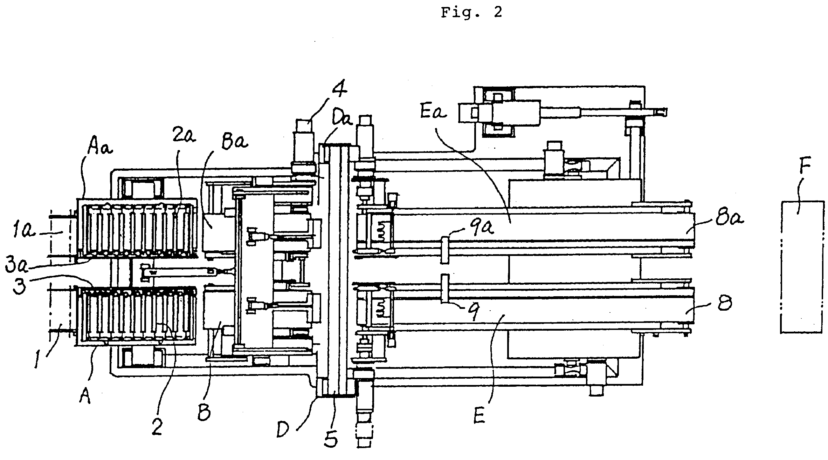

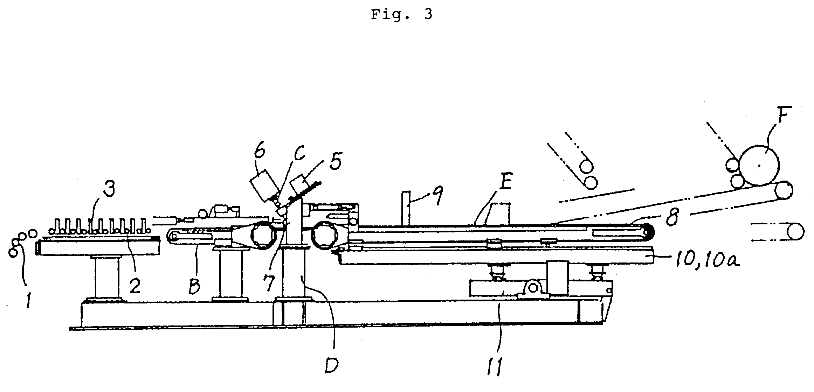

The present invention will be described with reference to Figs. 1 through 3, in which since the rolls (R, Ra, L, La) and the molding drum F are identical with those of the conventional system, they will be described no more.

Conveyors A and Aa are composed of inlet oblique roller groups 1 and 1a, drive roller groups 2 and 2a, and guide roller groups 3 and 3a disposed along the inner edges of the drive roller groups 2 and 2a. The positions of the inner edges of the pair of sheets S and Sa of material are determined by the guide roller groups 3 and 3a.

Belt conveyors B and Ba are disposed on the downstream side of the conveyors A and Aa and driven by a motor 4 in synchronized relation to conveyors E and Ea. Tables D and Da are provided between the conveyors B and Ba and the conveyors E and Ea, on which a cutter C is movable along a beam 5 at right angles to the moving direction of the conveyors. The cutter C is, for example, of the rotary type which cuts the sheets of material S and Sa by means of a disc knife 7 rotated by a motor 6. The cutting line of the cutter is not necessarily at right angles to the conveyor moving direction, and in this case, two cutters may be provided for the two conveyor lines individually if desired. In this embodiment shown in the drawings, the cutter C is commonly used for the sheet of material S and Sa.

Each conveyor E, Ea has a conveyor assembly 8, 8a and an optical sensor 9, 9a for detection of the length of each sheet of material S, Sa lying on each conveyor. Each conveyor assembly 8, 8a can be shifted in the conveyor moving direction on a frame 10, 10a by a known drive unit (not shown), and the two frames 10 and 10a with the conveyor assemblies 8 and 8a supported thereon can be shifted in synchronized manner in the widthwise direction on a frame 11 in a known manner. Further, the frame 11 can be lifted in a known manner such that the outlet end of each conveyor 8, 8a comes into pressure contact with the molding drum F.

In operation, the sheets of material S and Sa unrolled from the rolls R and Ra are conveyed by the conveyors B and Ba with positions of their inner edges kept unchanged. On the tables D and Da, they are cut to a length corresponding to the circumference of one tire, and the thus cut sheets of material S and Sa are delivered onto the winding conveyors E and Ea. The conveyors E and Ea with the cut sheets of material S and Sa lying thereon are shifted in the widthwise direction such that the spacing between the cut sheets of material S and Sa becomes a given distance. Then, the conveyors E and Ea are shifted in the moving direction thereof until the outlet end of each conveyor is pressed against the molding drum F; as a result, the sheets of material S and Sa can be wound around the molding drum F automatically.

As described above, according to the present invention, the pair of sheets of material (such as tire side wall material) unrolled which forms part of each tire is delivered onto the first pair of conveyors, the sheets of material are cut to a length corresponding to the circumference of one tire, the second pair of conveyors is shifted in the widthwise direction thereof such that the spacing between them becomes compatible with the width of the tire, the cut sheets of material are conveyed by the second conveyors, and then, the cut sheets of material are wound around the molding drum.

Therefore, the cut pair of sheets of tire material is always wound around the molding drum under predetermined conditions dependent on the tire size. There is no need for adjustment of positioning guide units as used in the prior art.

Since the widthwise positions of the second pair of conveyors are adjusted, desirably in a synchronized manner by the use of ball screw, servo motor, etc., positioning data therefor can readily be set.

## Claims

1. A material winding method in a tire molding machine, comprising the steps of
delivering a pair of sheets of material (S, Sa) unrolled from rolls (R, Ra) which forms part of each tire onto a first pair of conveyors (A, B; Aa, Ba) by which the pair of sheets of material is conveyed,
cutting the pair of sheets of material to a length corresponding to the circumference of one tire,
delivering the thus cut pair of sheets of material onto a second pair of conveyors (E, Ea),
shifting the second pair of conveyors (E, Ea) in the widthwise direction thereof such that the spacing between them becomes compatible with the width of the tire,
conveying the cut pair of sheets of material by the second pair of conveyors (E, Ea), and
winding the cut pair of sheets of material around a molding drum (F).

2. A material winding apparatus of a tire molding machine, comprising
a first pair of conveyors (A, B; Aa, Ba) for conveying a pair of sheets of material (S, Sa) unrolled from rolls (R, Ra) which forms part of each tire,
a cutter disposed on the downstream side of the first pair of conveyors (A, B; Aa, Ba) for cutting the pair of sheets of material to a length corresponding to the circumference of one tire, and
a second pair of conveyors (E, Ea) disposed on the downstream side of the cutter for conveying the cut pair of sheets of material onto a molding drum (F) for winding the cut pair of sheets of material therearound, characterized in that the second conveyors being shiftable in the widthwise direction thereof.

3. A material winding apparatus of a tire molding machine according to claim 2, wherein each second conveyor (E, Ea) is provided with a conveyor assembly (8, 8a), each conveyor assembly is supported on a frame (10, 10a), and the two frames (10, 10a) are shiftable in the widthwise direction thereof.

4. A material winding apparatus of a tire molding machine according to claim 2 or 3, wherein each second conveyor (E, Ea) is shiftable toward the molding drum (F).

## Patentansprüche

1. Materialwickelverfahren bei einer Reifenaufbaumaschine, umfassend folgende Schritte:
Zuführen von zwei von Rollen (R, Ra) abgespulten, Teil eines jeden Reifens bildenden Materiallagen (S, Sa) auf ein erstes Paar von Förderern (A, B; Aa, Ba), durch welche die beiden Materiallagen transportiert werden,
Schneiden der beiden Materiallagen auf eine Länge entsprechend dem Umfang eines Reifens,
Zuführen der beiden so geschnittenen Materiallagen auf ein zweites Paar von Förderern (E, Ea),
Verschieben des zweiten Paars von Förderern (E, Ea) in deren Breiten- oder Querrichtung, derart, daß der Abstand dazwischen mit der Breite des Reifens kompatibel wird bzw. dieser angepaßt ist,
Transportieren der geschnittenen Materiallagen mittels des zweiten Paars von Förderern (E, Ea) und
Wickeln der beiden geschnittenen Materiallagen um eine Formtrommel (F).

2. Materialwickelvorrichtung bei einer Reifenaufbaumaschine, umfassend
ein erstes Paar von Förderern (A, B; Aa, Ba) zum Transportieren von zwei von Rollen (R, Ra) abgespulten, Teil eines jeden Reifens bildenden Materiallagen (S, Sa),
eine dem ersten Paar von Förderern (A, B; Aa, Ba) nachgeschaltete Schneideinheit zum Schneiden der beiden Materiallagen auf eine Länge entsprechend dem Umfang eines Reifens und
ein der Schneideinheit nachgeschaltetes Paar von zweiten Förderern (E, Ea) zum Transportieren der beiden geschnittenen Materiallagen auf eine Formtrommel (F) zum Wickeln der beiden geschnittenen Materiallagen um letztere (herum), dadurch gekennzeichnet, daß die zweiten Förderer in ihrer Breiten- oder Querrichtung verschiebbar sind.

3. Materialwickelvorrichtung bei einer Reifenaufbaumaschine nach Anspruch 2, wobei jeder zweite Förderer (E, Ea) mit einer Förder(er)anordnung (8, 8a) versehen ist, jede Förderanordnung auf einem Rahmen (10, 10a) getragen oder gelagert ist und die beiden Rahmen (10, 10a) in ihrer Querrichtung verschiebbar sind.

4. Materialwickelvorrichtung bei einer Reifenaufbaumaschine nach Anspruch 2 oder 3, wobei jeder zweite Förderer (E, Ea) zur Formtrommel (F) hin verschiebbar ist.

## Revendications

1. Procédé d'enroulement de matériau dans une machine de moulage de pneumatique, comprenant les étapes de :
utilisation d'un couple de feuilles de matériau (S, Sa) déroulé de rouleaux (R, Ra) qui font partie de chaque pneumatique, sur un premier couple de transporteurs (A, B; Aa, Ba) au moyen desquels est transporté le couple de feuilles de matériau,
coupe du couple de feuilles de matériau à une longueur correspondant à la circonférence d'un pneumatique,
amenée du couple ainsi coupé de feuilles de matériau sur un deuxième couple de transporteurs (E, Ea),
décalage du deuxième couple de transporteurs (E, Ea) dans le sens de leur largeur, de manière que l'espacement entre eux deviennent compatible avec la largeur du pneumatique,
transport du couple coupé de feuilles de matériau au moyen du deuxième couple de transporteurs (E, Ea), et
enroulement du couple coupé de feuilles de matériau autour d'un tambour de moulage (F).

2. Dispositif d'enroulement de matériau d'une machine de moulage de pneumatique, comprenant :
un premier couple de transporteurs (A, B; Aa, Ba) conçu afin de transporter un couple de feuilles de matériau (S, Sa) déroulé de rouleaux (R, Ra) qui font partie de chaque pneumatique,
une lame de coupe disposée du côté aval du premier couple de transporteurs (A, B; Aa, Ba), afin de couper le couple de feuilles de matériau à une longueur correspondant à la circonférence d'un pneumatique, et
un deuxième couple de transporteurs (E, Ea) disposé du côté aval de la lame de coupe afin de transporter le couple coupé de feuilles de matériau sur un tambour de moulage (S), pour enrouler tout autour la couple coupé de feuilles de matériau, caractérisé en ce que les deuxièmes transporteurs peuvent être décalés dans le sens de leur largeur.

3. Dispositif d'enroulement de matériau d'une machine de moulage de pneumatique selon la revendication 2, dans lequel chaque deuxième transporteur (E, Ea) est pourvu d'un agencement de transporteur (8, 8a), chaque agencement de transporteur étant monté sur un cadre (10, 10a), et les deux cadres (10, 10a) pouvant être décalés dans le sens de leur largeur.

4. Dispositif d'enroulement de matériau d'une machine de moulage de pneumatique selon la revendication 2 ou 3, dans lequel chaque deuxième transporteur (E, Ea) peut être décalé vers le tambour de moulage (S).
